# EUROPEAN PATENT SPECIFICATION

(11) **EP 1 362 658 B1**
(45) Date of publication and mention of the grant of the patent: **20.07.2005**
(21) Application number: 03425266.8
(22) Date of filing: 30.04.2003
(51) Int. Cl.: B23D 47/02, B27B 5/22, B23Q 1/74, B23Q 7/05, B27B 27/04

(54) **Machine for sawing panels**
Maschine zum Sägen von Platten
Machine pour scier des panneaux

(30) Priority: 14.05.2002 IT BO20020290
(43) Date of publication of application: 19.11.2003
(73) Proprietor: SCM GROUP S.p.A., 47900 Rimini (IT)
(72) Inventor: Spazzoli, Andrea, 47814 Bellaria (RIMINI) (IT)
(74) Representative: Lanzoni, Luciano

(56) References cited:
- EP-A- 1 205 285
- DE-A- 1 628 865
- US-A- 1 346 269
- US-A- 4 852 623

## Description

The present invention relates to a machine for working large, heavy panels which are difficult to handle manually, according to the preamble of claim 1.

Such a machine is known from US-A-1346269.

In particular, the invention pertains to machines for working panels made of wood or similar materials and, specifically, to a panel sawing machine, but it may also advantageously be used to work other materials such as cardboard, plasterboard, fibreglass or synthetic materials.

Machines of this type, used for cutting large panels into smaller panels, are well known and basically comprise a base with a long, narrow work table on which a cutting tool, in this particular instance a circular blade, works.

The base is associated with a mobile carriage or frame that creates a work surface, lying in the same plane as the work table on the base, for supporting the panel. The carriage runs lengthways in a horizontal plane in a direction parallel to the work table: a rule, having a graduated scale and extending along one side of the carriage at right angles to the length of the work table, indicates the distances between the circular blade and each reference mark on the scale.

The panel to be cut is placed on the carriage with one edge against the edge of the rule and in such a way that the end of that edge coincides with the reference mark on the rule corresponding to the length which that edge is to be cut down to. The carriage is then moved towards the circular blade that cuts the panel to the desired size.

To be able to machine very long panels, the carriage and the rule have an axially mobile end on the side opposite the base so that the work surface that supports the panel can be extended if necessary.

Another feature worthy of note is that, in order to be able to work large panels, machines of this kind tend to have very large footprints, which has given rise to a general need to limit the overall dimensions of machines, but without reducing the size of the panels that can be worked.

Moreover, on account of the large size of the panels, cutting precision during cutting operations depends on the fact that the entire surface of the panel is supported, especially at the corners. Unsupported corner portions create false planes, meaning that the panel does not lie perfectly flat and thus leading to errors in the position and direction of the panel cutting line. To provide this support at the position furthest away from the cutting line, the carriage is equipped with a supporting roller at the end opposite the base and the rule also has a pair of supporting wings at the end of it opposite the base in order to support the end of the panel.

The need for two wings, one on each side of the rule body, is due to the fact the rule may be fitted on either side of the carriage, depending on specific working requirements, so that, when needed, either one or the other of the wings can be fitted. The working width of the carriage is the distance between the two positions where the rule can be fitted.

Since the surface of the roller and that of the supporting wings lie in the same plane, there may be interference between the two surfaces. One way of avoiding this interference is to shorten the roller so that it remains alongside the corresponding wing. By doing so, however, a part of the working width of the carriage becomes unusable when a large panel equal in width to the maximum working width has to be worked because the panel end at the end of the roller opposite the rule is inadequately supported and thus creates the problems described above.

It is known from document US-A- 1 346 269, which is considered to represent the closest state of the art, a machine for working panels having a work table and a machine tool associated with the work table. The machine presents also a frame for supporting the panel associated to the work table and slidable in both directions in such a way to dispose the panel at the machining tool. At right angle of the work table there is a rule for measuring the panel and associated with the frame. A roller is mounted at the end of the frame in such a way to support a panel.

The present invention has for an object to overcome the disadvantages of prior art by providing a machine for working panels whose overall structure is limited in size but which is nevertheless capable of working large panels.

These aims and others, which shall become more readily apparent in the course of the description that follows, are achieved, in accordance with the present invention, by a machine for working panels as described in independent claim 1.

Other technical characteristics and advantages will become more apparent from the detailed description of a preferred non-restricting embodiment of a panel working machine according to the present invention.

The description is set out below with reference to the accompanying drawings which are provided solely for purposes of illustration without restricting the scope of the invention and in which:
- Figure 1 schematically illustrates the machine according to the invention in a perspective view;
- Figure 2 is a schematic plan view, with some parts cut away in order to better illustrate others, of the machine of Figure 1, with a panel being worked in it;
- Figure 3 is a perspective view showing the frame of the machine of Figure 1 in a first configuration;
- Figure 4 is a perspective view showing the frame of the machine of Figure 1 in a second configuration;

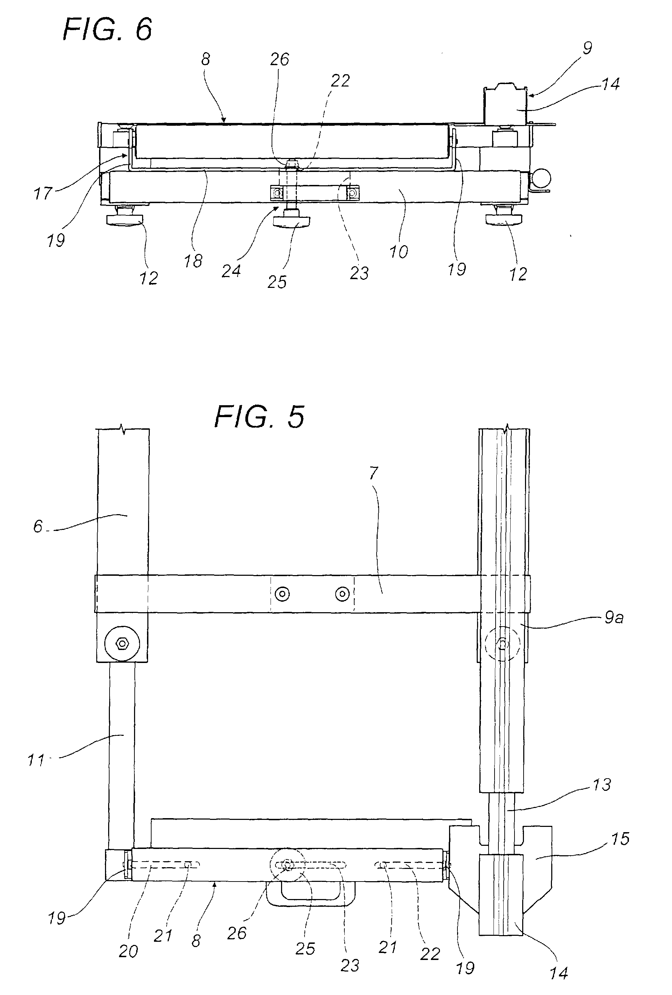

- Figure 5 illustrates a detail of the frame of Figure 3 in a plan view;
- Figure 6 is a front view of the detail of Figure 5.

With reference to the accompanying drawings, the numeral 1 denotes in its entirety a machine, according to the present invention, for working panels P.

In the embodiment described below, the machine 1 according to the invention is used for cutting panels P made of wood or similar materials down to size, but it will be understood that the invention may also apply to machines for working panels made of other materials or for performing operations other than cutting, such as routing or boring.

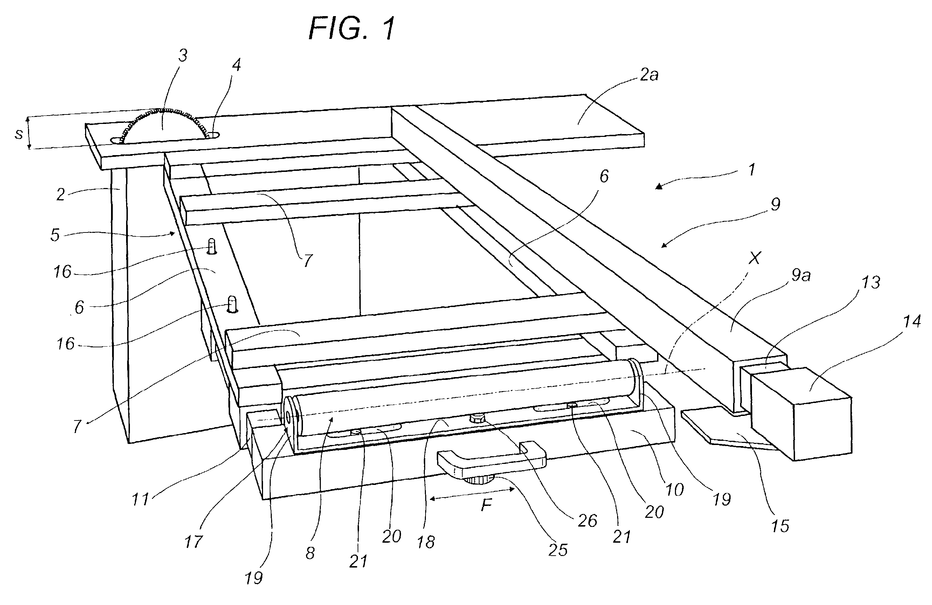

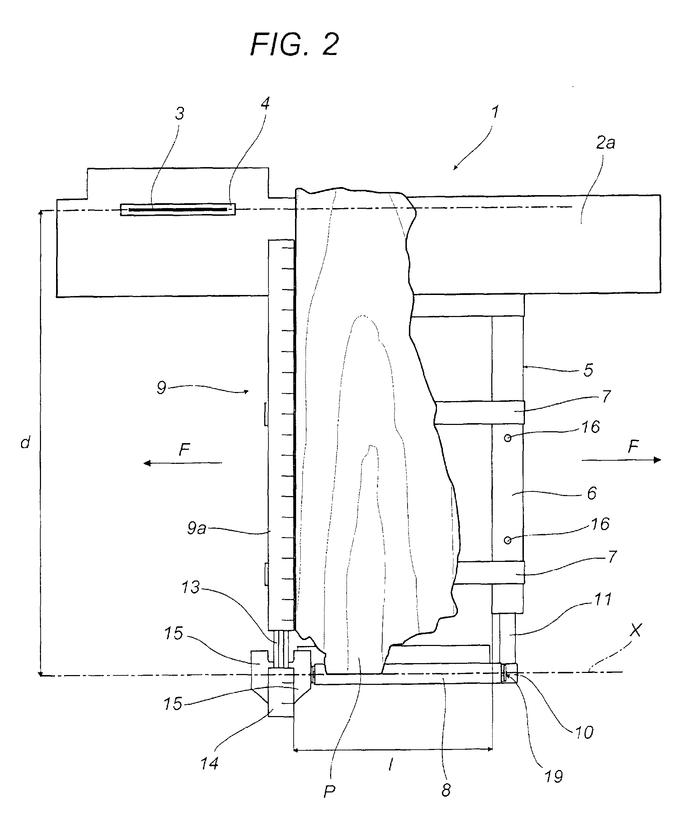

With reference to Figures 1 and 2 the machine essentially comprises a base 2, with a long narrow work table 2a, which is much longer than it is wide and on which there works a tool 3, in particular a rotary circular blade mounted below the work table 2a and protruding from the latter through a slot 4. The extent "s" by which the blade 3 protrudes from the work table 2a determines the width of the panel P that may be cut in a single pass.

The base 2 is associated with a sliding frame 5 which can move in a horizontal plane in both directions, parallel to the length of the work table 2a, as indicated by the arrows "F" in the accompanying drawings. The means by which the frame 5 is attached to the base 2 to make it slidable relative to the base 2 and to support the end opposite the work table 2a which projects from the base 2 are well within the knowledge of an expert in the trade and therefore are not illustrated in the drawings or described in this specification.

The frame 5 comprises at least one pair of longitudinal members 6 oriented at right angles to the base 2 and connected to each other by at least one pair of crossbeams 7, which form a work surface for supporting the panel P and lying in the same plane as the work table 2a on the machine base 2. On the end opposite the end adjacent to the base 2, the frame 5 is equipped with a supporting roller 8 whose radially external surface in the vertical plane containing the axis of rotation X of the supporting roller 8, is tangent to the work surface defined by the crossbeams 7.

A rule 9, having a graduated scale and extending along one side of the frame 5 at right angles to the length of the work table 2a, indicates the distance "d" between the circular blade 3 and each reference mark on the scale (Figure 2).

Advantageously, the end of the frame 5 equipped with the supporting roller 8 can move lengthways relative to the rest of the frame 5, thus enabling the frame 5 to be lengthened.

This lengthening possibility is achieved, for example, by a telescopic coupling between the aforementioned end of the frame 5 and the pair of longitudinal members 6: the structure of this type of telescopic coupling is well known to experts in the trade and does not require further explanation. Other mechanical solutions for extending the frame 5 might equally well be applied. In this regard, it is emphasised that the structural and kinematic solutions adopted in the embodiment of the machine specifically described in this specification are provided merely by way of exemplary illustration and that all the possible alternatives to these solutions are not described. These alternative solutions may be easily inferred from the description of the desired result in each specific case.

In the embodiment specifically described herein, the end of the frame 5 consists of a bar 10 extending across the frame 5 and attached to a pair of stems 11 sliding inside a matching pair of longitudinal tubular members 6.

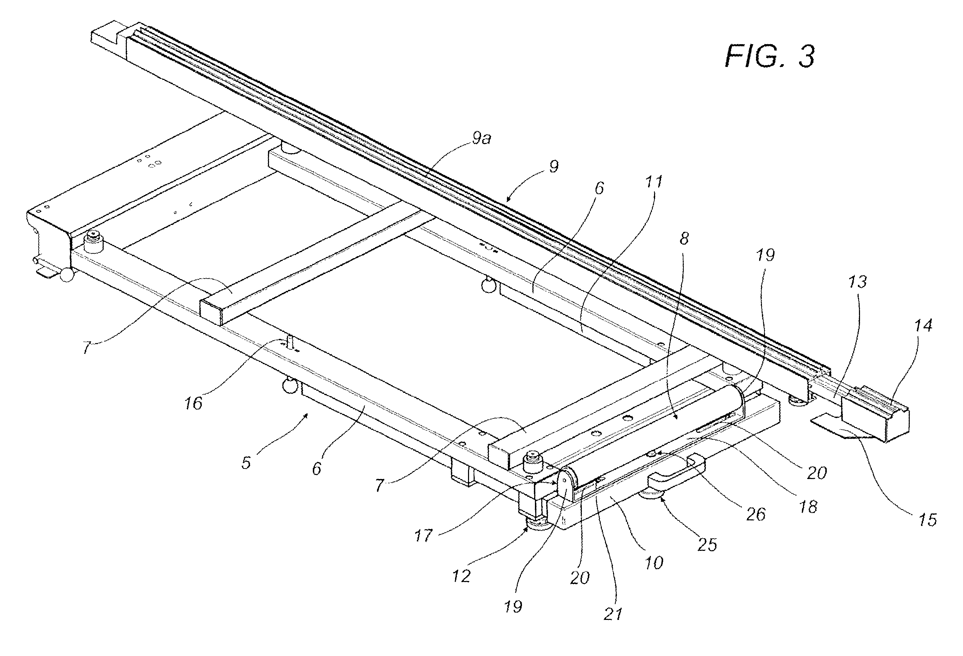

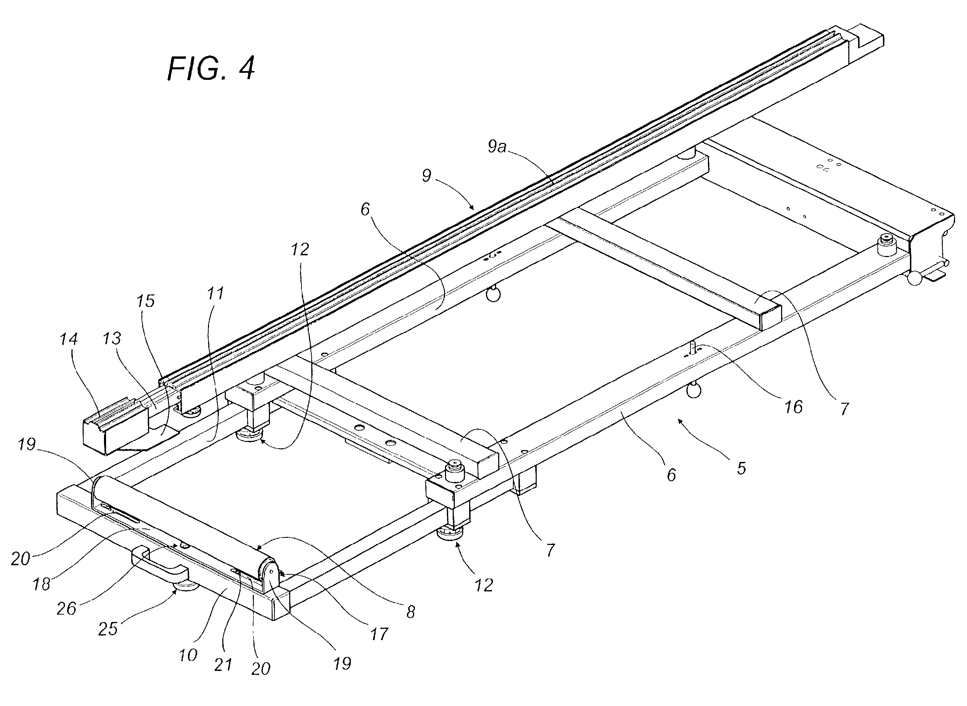

Customary locking devices 12 fix the positions of the stems 11 relative to the longitudinal members 6 (Figures 3 and 4).

In substantially the same way, the rule 9 also consists of a tubular body 9a, inside which there slides a stem 13 attached to an end block 14 that is separate from the body 9a of the rule 9 and that moves axially away from the body 9a when the stem 13 slides out of it.

The end block 14 of the rule 9 has fixed to it two supporting wings 15, one on each side of the body 9a of the rule 9, lying in the same plane as the work surface of the frame 5.

The rule 9 can be fitted on either side of the frame by inserting into the rule body at least one pair of locating pins 16 protruding vertically upwards from the two longitudinal side members 6. Advantageously, the pins 16 are made in such a way as to permit precise positioning of the rule 9 on the frame 5.

According to the invention, the supporting roller 8 is mounted on the bar 10 in a U-shaped support 17 that comprises a central body 18 positioned on the bar 10 and two flanges 19 protruding vertically from the body 18. The roller 8 is rotatably attached to the flanges 19 and revolves about an axis of rotation X parallel to the bar 10.

Preferably, the roller 8 is mounted in such a way as to be able to turn freely.

According to the invention, the U-shaped support 17 is slidably mounted on the bar 10 in such a way that it can move in direction parallel to the bar between two axially opposite end positions.

Advantageously, the surface of the bar 10 in contact with the U-shaped support 17 and the support itself are coated with a film, for example of PTFE (such as Teflon®), to facilitate sliding.

In the particular embodiment being described, the body 18 of the U-shaped support 17 has at least one slot 20, and preferably two slots 20, oriented in a direction parallel to the axis of rotation X of the roller 8 and located symmetrically about the centre of the body 18. From the surface of the bar 10 facing the body 18 of the U-shaped support 17 there protrude vertically upwards one or more pins 21, one per slot 20, which fit into the slot or slots 20.

Evidently, the slot-pin combination 20, 21 permits axial motion of the U-shape support 17 on the surface of the bar 10 in a direction parallel to the axis of rotation of the roller 8, where the pins 21 constitute limit stops for the U-shaped support 17 and guide means for aligning its translational motion along the bar 10. For locking the U-shaped support 17 in a set position on the bar 10, in accordance with the invention, the body 18 of the U-shaped support 17 has a through hole 22 oriented perpendicularly to the frame 5 at a slot 23 made in the bar 10 and oriented in a direction parallel to the axis of rotation of the roller 8. A bolt 24, positioned in the slot 23, passes through the bar 10 and the hole 22 in the body of the U-shaped support 17 in a direction perpendicular to the surface of the frame 5. The bolt 24 is equipped with a control knob 25 protruding vertically downwards from the bar 10, and a lock nut 26 screwed on its other end, facing the roller 8, and protruding from the body of the U-shaped support 17.

In light of the foregoing, the operation of the machine 1 according to the invention is easy to understand.

Let's assume that the machine 1 is set up with the rule 9 on the left-hand side of the frame 5 and the supporting roller 8 locked at the right-hand end of the bar 10 (Figure 4). In this position, there is no interference between the supporting wing 15 and the roller 8. Both can slide freely relative to each other even though the surface of the roller 8 and that of the supporting wing 15 lie in the same plane. The right-hand end of the roller 8 is at the right-hand end of the frame 5. In other terms, the roller 8 and the supporting wing 15 cover the full working width available for supporting a panel P to be worked (Figure 2) and, in particular, to be sawn to a required size.

The set-up of the machine 1 can be easily changed so that the rule 9 is on the right-hand side of the frame 5 (Figure 3), by simply: removing the rule 9 from the frame 5; unscrewing the knob 25 to release the U-shaped support 17 from the bar 10; moving the support 17 to the left-hand end of the frame 5 and locking it in this position by screwing on the knob 25; and, lastly, fitting the rule 9 on the right-hand side.

This recreates the same situation as that described above, mirrored about the longitudinal centre line of the frame 5. The wing 15 and the roller 8 do not interfere with each other and, although they lie in the same plane, they can be freely moved relative to each other, whilst the working width "1" of the frame's work surface remains unchanged. Thus, the part previously served by one of the wings 15 is now supported by the roller, whilst the other wing 15 covers the part left free by the roller 8, now on the left-hand side.

The present invention overcomes the disadvantages of prior art and achieves the preset aims.

Firstly, the machine according to the invention allows greater freedom of movement for the supporting roller which can now be removed from the frame without interfering with the corresponding rule wing and thus making it easier to position a panel on the machine: the panel is placed with one end on the roller and then, by pushing it from the other end, is raised and moved into the horizontal position on the work surface of the frame, on the supporting wing. The bar that supports the roller can be moved towards the frame, with the panel sliding on the wing, until the end of the panel is at the desired reference mark on the graduated scale and the panel is thus ready to be cut to size.

Further, the rule can be fitted on either side of the frame without changing the working width of the machine, since the full width of the panel is always supported by the frame, whatever the position of the rule.

## Claims

1. A machine for working panels comprising:
- a work table (2a) which is much longer than it is wide;
- a machining tool (3) associated with the work table (2a);
- a frame (5) for supporting the panel (P), associated with the work table (2a) and slidable in both directions parallel to the length of the work table; the frame (5) being equipped, at one end, opposite to the work table (2a), with a bar (10) that mounts at least one roller (8) for supporting and moving the panel (P);
- a rule (9) for measuring the panel (P), mounted on the frame (5) at right angles to the work table (2a);
the machine being **characterised in that** the roller (8) is adjustable relative to the bar (10) in a direction parallel to its axis of rotation (X) and to the length of the work table (2a); and said measuring rule (9) is mountable at either end of the roller (8).

2. The machine according to claim 1, **characterised in that** the roller (8) is mounted between the flanges (19) of a U-shaped support (17), the U-shaped support (17) being mobile on the bar (10) in both directions, parallel to the axis of rotation (X) of the roller (8) between two axially opposite positions.

3. The machine according to claim 2, **characterised in that** the U-shaped support (17) has at least one slot (20) made in it that is oriented in a direction parallel to the axis of rotation (X) of the roller (8).

4. The machine according to claim 2, **characterised in that** the U-shaped support (17) has at least one hole (22) made in it that is oriented in a direction perpendicular to the frame (5).

5. The machine according to claim 2**, characterised in that** the bar (10) has at least one slot (23) made in it that is oriented in a direction parallel to the axis of rotation (X) of the roller (8).

6. The machine according to claim 3**, characterised in that** the bar (10) comprises one or more pins (21) inserted in the slot or slots (20) made in the U-shaped support (17).

7. The machine according to claims 4 and 5, **characterised in that** the frame (5) comprises at least one bolt (24) passing through the bar (10) in a direction perpendicular to the surface of the frame (5), the bolt (24) being mounted in such a way as to pass through the slot (23) in the bar (10) and through the hole (22) in the U-shaped support (17), and being equipped with a control knob (25) on the end of it opposite the roller (8) and with a lock nut (26) screwed on its other end, facing the roller (8).

8. The machine according to claim 1, **characterised in that** the bar (10) can move in both directions in the plane in which the frame (5) lies and at right angles to the length of the work table (2a).

9. The machine according to claim 1, **characterised in that** the rule (9) comprises an end block (14) that can move in both directions in the plane in which the frame (5) lies and at right angles to the length of the work table (2a).

10. The machine according to claim 9**, characterised in that** the end block (14) has two wings (15) for supporting the panel (P) and located on opposite sides of the end block (14) in the plane made by the work surface of the frame (5).

11. The machine according to claim 10, **characterised in that** when one of the wings (15) is positioned adjacent to one end of the bar (10), the roller (8) is positioned at the opposite end of the bar (10).

## Patentansprüche

1. Maschine zur Bearbeitung von Platten, enthaltend:
- einen Arbeitstisch (2a), welcher viel länger als breit ist;
- ein dem Arbeitstisch (2a) zugeordnetes Bearbeitungswerkzeug (3);
- einen Rahmen (5) zum Tragen der Platte (P), zugeordnet dem Arbeitstisch (2a) und verschiebbar in beiden Richtungen parallel zu der Länge des Arbeitstisches, wobei der Rahmen (5) an einem Ende, das dem Arbeitstisch (2a) gegenüberliegt, mit einer Stange (10) versehen ist, an welcher wenigstens eine Rolle (8) zum Stützen und Bewegen der Platte (P) montiert ist;
- eine Messleiste (9) zum Messen der an dem Rahmen (5) in rechten Winkeln zu dem Arbeitstisch (2a) montierten Platte (P);
wobei die Maschine **dadurch gekennzeichnet ist, dass** die Rolle (8) im Verhältnis zu der Stange (10) in einer Richtung parallel zu ihrer Drehachse (X) und zu der Länge des Arbeitstisches (2a) verstellt werden kann; und dass die genannte Messleiste (9) an jedem Ende der Rolle (8) montierbar ist.

2. Maschine nach Patentanspruch 1, **dadurch gekennzeichnet, dass** die Rolle (8) zwischen den Flanschen (19) einer U-förmigen Halterung (17) montiert ist, wobei die U-förmige Halterung (17) an der Stange (10) in beiden Richtungen und parallel zu der Drehachse (X) der Rolle (8) zwischen zwei sich axial gegenüberliegenden Positionen beweglich ist.

3. Maschine nach Patentanspruch 2, **dadurch gekennzeichnet, dass** die U-förmige Halterung (17) wenigstens einen in diese eingearbeiteten Schlitz (20) aufweist, der in einer Richtung parallel zu der Drehachse (X) der Rolle (8) ausgerichtet ist.

4. Maschine nach Patentanspruch 2, **dadurch gekennzeichnet, dass** die U-förmige Halterung (17) wenigstens eine in diese eingearbeitete Bohrung (22) aufweist, die in einer Richtung lotrecht zu dem Rahmen (5) ausgerichtet ist.

5. Maschine nach Patentanspruch 2, **dadurch gekennzeichnet, dass** die Stange (10) wenigstens einen in diese eingearbeiteten Schlitz (23) aufweist, der in einer Richtung parallel zu der Drehachse (X) der Rolle (8) ausgerichtet ist.

6. Maschine nach Patentanspruch 3, **dadurch gekennzeichnet, dass** die Stange (10) einen oder mehrere Zapfen (21) enthält, eingesetzt in den Schlitz oder die Schlitze (20), die in die U-förmige Halterung (17) eingearbeitet sind.

7. Maschine nach den Patentansprüchen 4 und 5, **dadurch gekennzeichnet, dass** der Rahmen (5) wenigstens einen Bolzen (24) enthält, der in einer Richtung lotrecht zu der Oberfläche des Rahmens (5) durch die Stange (10) geführt ist, wobei der Bolzen (24) auf solche Weise montiert ist, dass er durch den Schlitz (23) in der Stange (10) und durch die Bohrung (22) in der U-förmigen Halterung (17) geht und an dem von der Rolle (8) entgegengesetzten Ende mit einem Betätigungsgriff (25) versehen ist, sowie mit einer Blockiermutter (26), die auf sein anderes, der Rolle (8) zugewandtes Ende aufgeschraubt ist.

8. Maschine nach Patentanspruch 1, **dadurch gekennzeichnet, dass** die Stange (10) in beiden Richtungen in der Ebene beweglich ist, in welcher der Rahmen (5) liegt, und in rechten Winkeln zu der Länge des Arbeitstisches (2a).

9. Maschine nach Patentanspruch 1, **dadurch gekennzeichnet, dass** die Messleiste (9) einen Endblock (14) enthält, der sich in beiden Richtungen in der Ebene bewegen kann, in welcher der Rahmen (5) liegt, und in rechten Winkeln zu der Länge des Arbeitstisches (2a).

10. Maschine nach Patentanspruch 9, **dadurch gekennzeichnet, dass** der Endblock (14) zwei Flügel (15) zum Tragen der Platte (P) hat, die auf entgegengesetzten Seiten des Endblockes (14) in der Ebene angeordnet sind, die durch die Arbeitsfläche des Rahmens (5) gebildet wird.

11. Maschine nach Patentanspruch 10, **dadurch gekennzeichnet, dass**, wenn einer der Flügel (15) angrenzend an ein Ende der Stange (10) positioniert ist, die Rolle (8) an dem entgegengesetzten Ende der Stange (10) angeordnet ist.

## Revendications

1. Une machine pour usiner des panneaux, comprenant :
- une table d'usinage (2a) qui est beaucoup plus longue que large ;
- un outil d'usinage (3) associé à la table d'usinage (2a) ;
- un châssis (5) pour le support du panneau (P), associé à la table d'usinage (2a) et pouvant coulisser dans les deux directions parallèlement à la longueur de la table d'usinage ; le châssis (5) étant équipé, à une extrémité, opposée à la table d'usinage (2a), d'une barre (10) qui supporte au moins un rouleau (8) pour le support et la manipulation du panneau (P) ;
- une règle (9) pour la mesure du panneau (P), montée sur le châssis (5) à angle droit avec la table d'usinage (2a) ;
la machine étant **caractérisée en ce que** le rouleau (8) est réglable par rapport à la barre (10) dans une direction parallèle à son axe de rotation (X) et à la longueur de la table d'usinage (2a) ; et ladite règle de mesure (9) peut être montée à une extrémité ou à l'autre du rouleau (8).

2. La machine selon la revendication 1, **caractérisée en ce que** le rouleau (8) est monté entre les flasques (19) d'un support (17) en forme de « U », ledit support (17) en forme de « U » étant mobile sur la barre (10) dans les deux directions, parallèlement à l'axe de rotation (X) du rouleau (8) entre deux positions axialement opposées.

3. La machine selon la revendication 2, **caractérisée en ce que** le support (17) en forme de « U » comporte au moins un orifice fendu (20) qui est orienté dans une direction parallèle à l'axe de rotation (X) du rouleau (8).

4. La machine selon la revendication 2, **caractérisée en ce que** le support (17) en forme de « U » comporte au moins un trou (22) qui est orienté dans une direction perpendiculaire au châssis (5).

5. La machine selon la revendication 2, **caractérisée en ce que** la barre (10) comporte au moins un orifice fendu (23) qui est orienté dans une direction parallèle à l'axe de rotation (X) du rouleau (8).

6. La machine selon la revendication 3, **caractérisée en ce que** la barre (10) comprend une ou plusieurs broches (21) insérées dans l'orifice fendu ou les orifices fendus (20) réalisés dans le support (17) en forme de « U ».

7. La machine selon les revendications 4 et 5, **caractérisée en ce que** le châssis (5) comprend au moins un boulon (24) traversant la barre (10) dans une direction perpendiculaire à la surface du châssis (5), le boulon (24) étant monté de manière à passer à travers l'orifice fendu (23) de la barre (10) et à travers le trou (22) du support (17) en forme de « U », et étant pourvu d'un bouton de commande (25) sur son extrémité opposée au rouleau (8) et d'un écrou de blocage (26) vissé sur son autre extrémité faisant face au rouleau (8).

8. La machine selon la revendication 1, **caractérisée en ce que** la barre (10) peut se déplacer dans les deux directions, dans le plan d'appartenance du châssis (5) et à angle droit avec la longueur de la table d'usinage (2a).

9. La machine selon la revendication 1, **caractérisée en ce que** la règle (9) comprend un bloc d'extrémité (14) qui peut se déplacer dans les deux directions, dans le plan d'appartenance du châssis (5) et à angle droit avec la longueur de la table d'usinage (2a).

10. La machine selon la revendication 9, **caractérisée en ce que** le bloc d'extrémité (14) est pourvu de deux ailettes (15) conçues pour supporter le panneau (P) et situées sur des côtés opposés de ce même bloc d'extrémité (14), dans le plan défini par la surface de travail du châssis (5).

11. La machine selon la revendication 10, **caractérisée en ce que**, quand une des ailettes (15) est adjacente à une extrémité de la barre (10), le rouleau (8) est positionné au niveau de l'extrémité opposée de cette même barre (10).
